# EUROPEAN PATENT APPLICATION

(11) **EP 3 163 472 A1**
(43) Date of publication of application: **03.05.2017**
(21) Application number: 15829845.5
(22) Date of filing: 01.07.2015
(51) Int. Cl.: G06F 17/30

(54) **METHOD AND APPARATUS FOR SHIELDING HETEROGENEOUS DATA SOURCE**

(30) Priority: 05.08.2014 CN 201410382384
(71) Applicant: Huawei Technologies Co. Ltd., Shenzhen, Guangdong 518129 (CN)
(72) Inventor: HUANG, Hongli, Shenzhen Guangdong 518129 (CN); LIU, Yanchu, Shenzhen Guangdong 518129 (CN)
(74) Representative: Pfenning, Meinig & Partner mbB
(86) International application number: PCT/CN2015/083101
(87) International publication number: WO 2016/019772

(57) **Abstract**

Embodiments of the present invention disclose a heterogeneous data source shielding method, including: receiving, by an IDE, a product process release request or a product process test request initiated by a user; obtaining, by the IDE, a configuration parameter of a product and a data flow model preconfigured for the product, where the data flow model includes a multi-input node that connects multiple input data sources, and a matching relationship between the input data sources and different configuration parameters is configured on the multi-input node; looking up, by the IDE and in the matching relationship, a corresponding input data source according to the configuration parameter of the product; replacing, by the IDE, the multi-input node in the data flow model with a found input data source, and using a data flow model obtained after replacing for the product process release or the product process test. The embodiments of the present invention further disclose a heterogeneous data source shielding apparatus. The present invention has advantages of shielding a difference between different input data sources and reducing costs for performing a product process release or test.

## Description

This application claims priority to Chinese Patent Application No. 201410382384.8, filed with the Chinese Patent Office on August 5, 2014 and entitled "METHOD AND APPARATUS FOR SHIELDING HETEROGENEOUS DATA SOURCE", which is incorporated herein by reference in its entirety.

### TECHNICAL FIELD

The present invention relates to the field of communications technologies, and in particular, to a method and apparatus for shielding heterogeneous data source.

### BACKGROUND

Data integration technology (such as, Extract Transform Load, ETL) is mainly to obtain data from various source systems, then the data is processed by using logic of the ETL, such as transformation, cleaning, associating, and aggregation, and finally data obtained after processing is loaded into a target system according to a service requirement. A data flow of the ETL implements functions such as extraction, transformation, and loading. In the data flow, logic such as extraction, transformation, and loading is abstracted and encapsulated to form multiple computation steps. Finally, E-T-L logic is implemented in a graphical development mode.

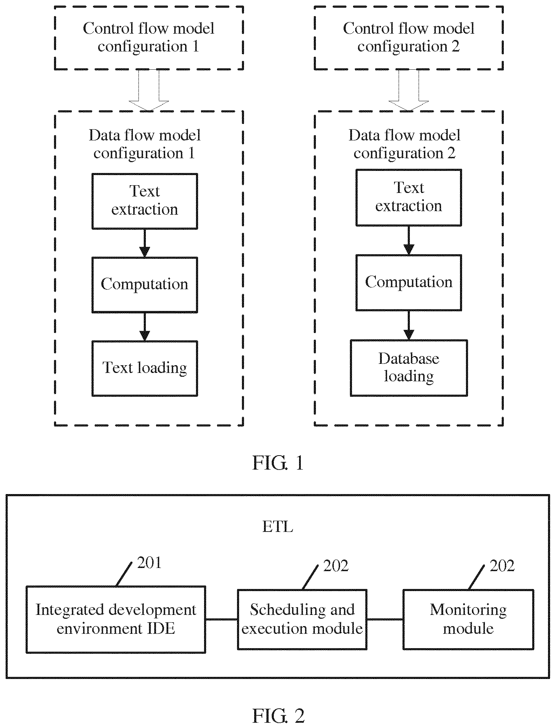

In an existing ETL architecture, an ETL development process includes: 1. In an integrated development environment (Integrated Development Environment, IDE), a data flow model is developed, a control flow model is developed, and a scheduling plan is set, and the data flow model, the control flow model, and the scheduling plan are saved as process information; 2. An execution apparatus obtains corresponding process information and executes specific logic; 3. A monitoring apparatus monitors a corresponding execution result by using a monitoring interface. In an existing ETL development process, for data that uses a same format, the data is loaded into different target data sources after being processed by using same computational logic. If N target data sources exist, N data flow models need to be configured, and accordingly N control flow models also need to be configured. If one data source is added, one set of control flow model and data flow model needs to be newly developed. Referring to FIG. 1, FIG. 1 is a schematic diagram of configuration that is of a control flow model and a data flow model according to the prior art when data in a same format is loaded into different target data sources after being processed by using same computational logic. In this case, when a baseline of a product is being developed, process information of multiple projects needs to be maintained, and corresponding mapping needs to be performed on processes of multiple projects, which increases development difficulty and raises costs of a product process release. In addition, after process development is completed, because processes are separately debugged, once a problem is found, the processes need to be modified one by one, and the processes need to be tested one by one. In a later period, if process configuration needs to be upgraded, costs of the process test and maintenance in the later period are high because multiple times more workload is required.

### SUMMARY

Embodiments of the present invention provide a heterogeneous data shielding source method and apparatus, so as to shield a difference between different input data sources or different target data sources, and reduce costs for performing a product process release or test.

A first aspect of the embodiments of the present invention provides a heterogeneous data source shielding method, where the method may include:
receiving, by an integrated development environment IDE, a product process release request or a product process test request initiated by a user;
obtaining, by the IDE, a configuration parameter of the product and a data flow model preconfigured for the product, where the data flow model includes a multi-input node that connects multiple input data sources, and a matching relationship between the input data sources and different configuration parameters is configured on the multi-input node;
looking up, by the IDE and in the matching relationship, a corresponding input data source according to the configuration parameter of the product; and
replacing, by the IDE, the multi-input node in the data flow model with a found input data source, and using a data flow model obtained after replacing for the product process release or the product process test.

With reference to the first aspect, in a first possible implementation manner, before the looking up, by the IDE and in the matching relationship, a corresponding input data source according to the configuration parameter of the product, the method further includes:
traversing, by the IDE, a graphical element in the data flow model to find a graphical element that is a multi-input node in the data flow model.

With reference to the first aspect or the first possible implementation manner of the first aspect, in a second possible implementation manner, the replacing, by the IDE, the multi-input node in the data flow model with a found input data source specifically includes:
modifying a graphical element number of the found input data source to a graphical element number of the multi-input node; and
deleting other input data sources, except the found input data source, connected with the multi-input node, and deleting the multi-input node.

With reference to any one of the first aspect to the second possible implementation manner of the first aspect, in a third possible implementation manner, the data flow model further includes a multi-output node connected to multiple target data sources, and a matching relationship between the target data sources and different configuration parameters is configured on the multi-output node; and
when traversing the graphical element in the data flow model, the IDE further finds a graphical element that is a multi-output node in the data flow model.

With reference to the third possible implementation manner of the first aspect, in a fourth possible implementation manner, the method further includes:
looking up, by the IDE and in the matching relationship between the target data sources and the different configuration parameters, a corresponding target data source according to the configuration parameter of the product; and
replacing, by the IDE, the multi-output node in the data flow model with a found target data source.

With reference to the fourth possible implementation manner of the first aspect, in a fifth possible implementation manner, the replacing, by the IDE, the multi-output node in the data flow model with a found target data source specifically includes:
modifying a graphical element number of the found target data source to a graphical element number of the multi-output node; and
deleting other target data sources, except the found target data source, connected with the multi-output node, and deleting the multi-output node.

With reference to any one of the first aspect to the fifth possible implementation manner of the first aspect, in a sixth possible implementation manner, the obtaining, by the IDE, a configuration parameter of the product specifically includes:
obtaining the configuration parameter of the product from a system configuration item of the product, or obtaining the configuration parameter of the product from a process configuration item of the product.

With reference to any one of the first aspect to the sixth possible implementation manner of the first aspect, in a seventh possible implementation manner, the input data source includes at least one of a text file, an Extensible Markup Language XML file, a relational database, a Hive, a Hadoop distributed file system HDFS, a Hadoop database Hbase, or an Mpp database.

With reference to any one of the first aspect to the seventh possible implementation manner of the first aspect, in an eighth possible implementation manner, the target data source includes at least one of a text file, an XML file, a relational database, a Hive, an HDFS, an Hbase, or an Mpp database.

A second aspect of the embodiments of the present invention provides a heterogeneous data source shielding apparatus, where the apparatus may include:
a receiving module, configured to receive a product process release request or a product process test request initiated by a user;
a precompilation module, configured to obtain a configuration parameter of the product and a data flow model preconfigured for the product, where the data flow model includes a multi-input node that connects multiple input data sources, and a matching relationship between the input data sources and different configuration parameters is configured on the multi-input node; look up, in the matching relationship, a corresponding input data source according to the configuration parameter of the product; and replace the multi-input node in the data flow model with a found input data source; and
an output module, configured to output a data flow model obtained after replacing by the precompilation module for the product process release or the product process test.

With reference to the second aspect, in a first possible implementation manner, before looking up, in the matching relationship, the corresponding input data source according to the configuration parameter of the product, the precompilation module is further configured to traverse a graphical element in the data flow model to find a graphical element that is a multi-input node in the data flow model.

With reference to the second aspect or the first possible implementation manner of the second aspect, in a second possible implementation manner, that the precompilation module replaces the multi-input node in the data flow model with a found input data source specifically includes:
modifying, by the precompilation module, a graphical element number of the found input data source to a graphical element number of the multi-input node, deleting other input data sources, except the found input data source, connected with the multi-input node, and deleting the multi-input node.

With reference to any one of the second aspect to the second possible implementation manner of the second aspect, in a third possible implementation manner, the data flow model further includes a multi-output node connected to multiple target data sources, and a matching relationship between the target data sources and different configuration parameters is configured on the multi-output node; and
the precompilation module is further configured to: when traversing the graphical element in the data flow model, find a graphical element that is a multi-output node in the data flow model.

With reference to the third possible implementation manner of the second aspect, in a fourth possible implementation manner, the precompilation module is further configured to look up, in the matching relationship between the target data sources and the different configuration parameters, a corresponding target data source according to the configuration parameter of the product, and replace the multi-output node in the data flow model with a found target data source.

With reference to the fourth possible implementation manner of the second aspect, in a fifth possible implementation manner, where that the precompilation module replaces the multi-output node in the data flow model with a found target data source specifically includes:
modifying, by the precompilation module, a graphical element number of the found target data source to a graphical element number of the multi-output node, deleting other target data sources, except the found target data source, connected with the multi-output node, and deleting the multi-output node.

With reference to any one of the second aspect to the fifth possible implementation manner of the second aspect, in a sixth possible implementation manner, where that the precompilation module obtains a configuration parameter of the product specifically includes:
obtaining, by the precompilation module, the configuration parameter of the product from a system configuration item of the product, or obtaining the configuration parameter of the product from a process configuration item of the product.

With reference to any one of the second aspect to the sixth possible implementation manner of the second aspect, in a seventh possible implementation manner, the input data source includes at least one of a text file, an Extensible Markup Language XML file, a relational database, a Hive, a Hadoop distributed file system HDFS, a Hadoop database Hbase, or an Mpp database.

With reference to any one of the second aspect to the seventh possible implementation manner of the second aspect, in an eighth possible implementation manner, the target data source includes at least one of a text file, an XML file, a relational database, a Hive, an HDFS, an Hbase, or an Mpp database.

A third aspect of the embodiments of the present invention provides a heterogeneous data source shielding system, where the system includes the apparatus according to the second aspect of the embodiments of the present invention, a scheduling and execution module, and a monitoring module, where
the scheduling and execution module is configured to execute, according to a data flow model output by the apparatus according to the second aspect of the embodiments of the present invention, logic corresponding to the data flow model; and
the monitoring module is configured to monitor an execution result of the scheduling and execution module.

In the method described in the embodiments of the present invention, a multi-input node is configured in a data flow model to connects different input data sources, and when a product process is being released or tested, the multi-input node in the data flow model is replaced with an input data source applicable to a product that is currently being released or tested, so that at a configuration stage, one data flow model may be configured for different input data sources having same computational logic, which reduces costs for performing a product process release and test.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a control flow model and a data flow model according to the prior art when data in a same format is loaded into different target data sources after being processed by using same computational logic;
FIG. 2 is a schematic diagram of a basic architecture applicable to an ETL system according to an embodiment of the present invention;
FIG. 3 is a schematic diagram of an internal function of an ETL system according to an embodiment of the present invention;
FIG. 4 is a schematic structural diagram of an IDE according to an embodiment of the present invention;
FIG. 5 is a schematic diagram of a data flow model according to an embodiment of the present invention;
FIG. 6 is a schematic flowchart of a heterogeneous data source shielding method according to an embodiment of the present invention;
FIG. 7 is a schematic diagram of a precompiled data flow model according to an embodiment of the present invention;
FIG. 8 is a schematic diagram of a data flow model according to another embodiment of the present invention;
FIG. 9 is a schematic diagram of a precompiled data flow model according to an embodiment of the present invention;
FIG. 10 is a schematic structural diagram of a heterogeneous data source shielding apparatus according to an embodiment of the present invention; and
FIG. 11 is a schematic structural diagram of a heterogeneous data source shielding apparatus according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

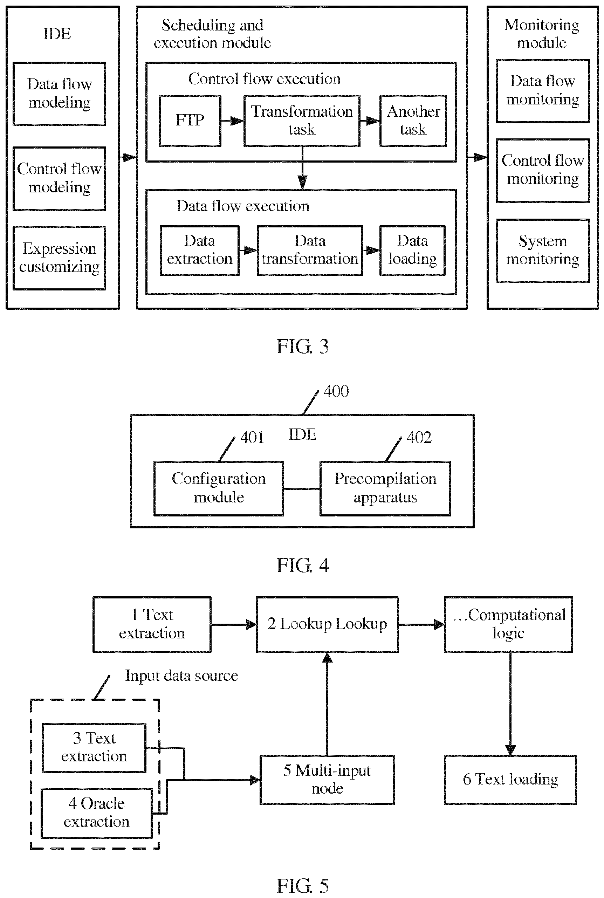

The embodiments of the present invention may be applicable to an ETL system. As shown in FIG. 2, a basic architecture of the ETL system includes: an integrated development environment (IDE) 201, a scheduling and execution module 202, and a monitoring module 203. FIG. 3 shows a schematic diagram of functions of each module in the ETL system in a specific example.

The IDE 201 is configured to establish data flow model, establish control flow model, customize expression, and/or the like, and save the data flow model, control flow model, and/or expression as process information for invocation and execution by the scheduling and execution module 202. The foregoing process information defines a rule for data extraction, transformation, or loading, for example, an extracted input data source, an extracted field, computational logic, or a loaded target data source. Corresponding logic is executed based on the process information.

The scheduling and execution module 202 is configured to obtain the process information and execute corresponding logic according to the process information.

The monitoring module 203 is configured to provide a monitoring interface to view an execution result of the scheduling and execution module 202.

In an embodiment of the present invention, an IDE in an ETL architecture may be improved. A data flow model in the IDE is configured as a data flow model that includes a multi-input node; a precompilation module is added into the IDE, so as to precompile the data flow model that includes a multi-input node. As shown in FIG. 4, FIG. 4 is a structural diagram of an IDE 400 according to this embodiment of the present invention. The IDE 400 includes a configuration module 401 and a precompilation apparatus 402.

The configuration module 401 is configured to implement data flow modeling, control flow modeling, and expression customization according to a user instruction. The configuration module 401 used during the data flow modeling in this embodiment of the present invention is different from the prior art. Specifically, the configuration module 401 in this embodiment of the present invention is configured to establish a data flow model that includes a multi-input node. As shown in FIG. 5, FIG. 5 is a schematic diagram of the data flow model that includes a multi-input node. The data flow model is formed by a series of graphical elements having execution logic, and each graphical element has a corresponding number. During external use, a graphical element may be visited by using a graphical element number. The multi-input node in the data flow model shown in FIG. 5 connects multiple input data sources, such as text extraction and Oracle extraction.

The precompilation apparatus 402 is configured to: when a product process is being released or tested, precompile a data flow model configured by the configuration module 401, so as to replace the multi-input node in the data flow model with an input data source applicable to a current product and therefore obtain a data flow model applicable to the current product.

In this embodiment of the present invention, the precompilation apparatus 402 is added to support a data flow model that includes the multi-input node and that is configured by the configuration module 401, so that shielding of a heterogeneous data source is implemented.

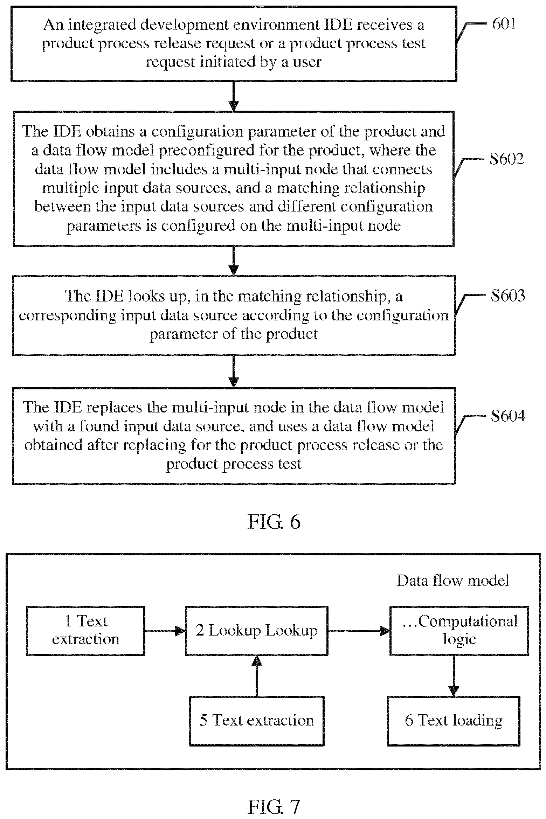

The following describes in detail, by using method embodiments in FIG. 6 to FIG. 9, how the precompilation apparatus 402 in the IDE implements shielding a heterogeneous data source by means of precompilation.

Referring to FIG. 6, FIG. 6 is a schematic flowchart of an embodiment of a heterogeneous data source shielding method according to an embodiment of the present invention. The heterogeneous data source shielding method described in this embodiment includes the following steps:
S601. An integrated development environment IDE receives a product process release request or a product process test request initiated by a user.

The IDE may provide a display interface for the user, and the user may initiate the product process release request or the product process test request by using the interface.

S602. The IDE obtains a configuration parameter of the product and a data flow model preconfigured for the product, where the data flow model includes a multi-input node that connects multiple input data sources, and a matching relationship between the input data sources and different configuration parametersdifferent configuration parameters is configured on the multi-input node.

In this embodiment of the present invention, at a stage at which the user configures the data flow model, the multi-input node is introduced into the data flow model, and a difference between heterogeneous data sources is shielded by configuring a data extraction rule on the multi-input node. In this embodiment of the present invention, an input data source for data extraction is selected according to the configuration parameter of the product. Therefore, in this embodiment of the present invention, the matching relationship between each data source and different configuration parameters is configured on the multi-input node, as shown in Table 1.

**Table 1**

| **Configuration parameter (value)** | **Input data source** |
|---|---|
| A | Text file |
| B | XML file |
| C | Relational database |

The configuration parameters in Table 1 are extraction conditions of the input data sources. For example, the input data sources include a text file, an Extensible Markup Language (Extensible Markup Language, XML) file, and a relational database. An extraction condition of the text file is that a value of a configuration parameter is A, an extraction condition of the XML file is that a value of a configuration parameter is B, and an extraction condition of the relational database is that a value of a configuration parameter is C.

After receiving the product process release request or the product process test request, the IDE obtains a configuration parameter of the product deployed at a current site. It should be noted that if the product process release request is received, a configuration parameter of the product may be obtained from a system configuration item of the product. If the product process test is received, the IDE may also obtain a configuration parameter from a process configuration item of the product. For example, a configuration parameter that is input by the user by using an interface is received, which may avoid frequently modifying the system configuration item during a test.

S603. The IDE looks up, in the matching relationship, a corresponding input data source according to the configuration parameter of the product.

It is assumed that a value of a configuration parameter of the product deployed at a current site is A, an input data source that is found in the matching relationship shown in the foregoing Table 1 and that may be used to perform data extraction is a text file.

S604. The IDE replaces the multi-input node in the data flow model with a found input data source, and uses a data flow model obtained after replacing for the product process release or the product process test.

Specifically, after obtaining the configuration parameter of the product and the foregoing data flow model, the IDE may traverse a graphical element in the foregoing data source model to find a graphical element that is a multi-input node. The IDE modifies a graphical element number of the found input data source to a graphical element number of the multi-input node, deletes other input data sources, except the input data source found in step S603, connected with the multi-input node, and deletes the multi-input node. That a found input data source for data extraction is a text file is used as an example. As shown in FIG. 7, FIG. 7 is a schematic diagram of the data flow model obtained after replacing.

In this embodiment of the present invention, rule information for data extraction is configured by introducing a multi-input node into a data flow configuration of an IDE in a basic architecture of ETL, and a difference between heterogeneous data sources for data integration is shielded by using rule information of the multi-input node, so as to integrate configurations that are of data having same computational logic and that are at different sites into one process for configuring. In this embodiment of the present invention, a precompilation apparatus is further introduced into the IDE. When performing precompilation, the foregoing precompilation apparatus may generate, according to an input data source selected on the multi-input node in the data flow model, a data flow model corresponding to a configuration parameter of a product, so that the data flow model can be used to perform process release or test.

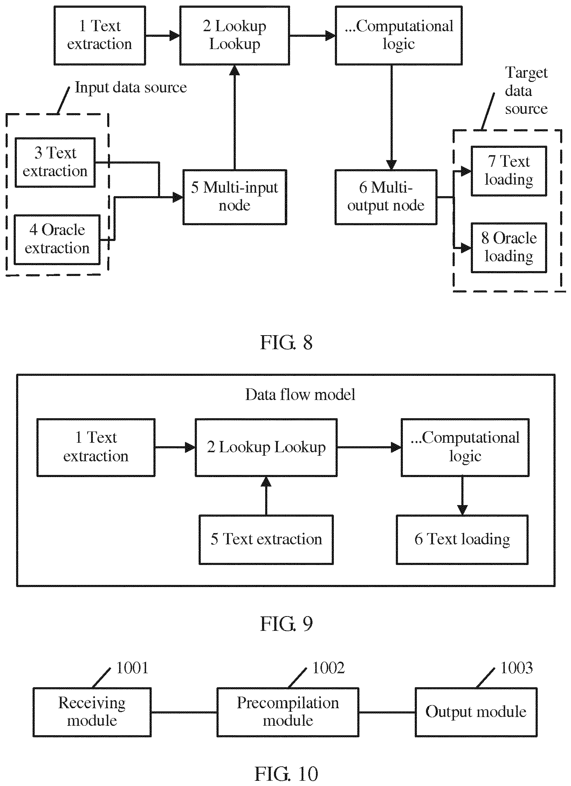

This embodiment of the present invention may be not only used to shield a heterogeneous input data source, but also used to shield a heterogeneous output data source. Specifically, the configuration module 401 in this embodiment of the present invention may be further configured to establish a data flow model that includes a multi-output node. As shown in FIG. 8, FIG. 8 is a schematic diagram of a data flow model that includes a multi-input node and a multi-output node. The multi-output node in the data flow model shown in FIG. 8 is connected to multiple target data sources, such as text loading and Oracle loading.

When precompiling the data flow model configured by the configuration module 401, in addition to replacing the multi-input node in the data flow model with the input data source applicable to a current product, the precompilation apparatus 402 may further replace the multi-output node in the data flow model with a target data source applicable to the current product, so as to obtain a data flow model applicable to the current product.

Specifically, in this embodiment of the present invention, at a stage at which the user configures the data flow model, in addition to introducing of the multi-input node into the data flow model, the multi-output node is also introduced into the data flow model, and a difference between heterogeneous data sources is shielded by configuring a data loading rule on the multi-output node. In this embodiment of the present invention, a target data source for data loading is selected according to a configuration parameter of the product. Therefore, in this embodiment of the present invention, a matching relationship between each target data source and different configuration parameters is configured on the multi-output node, as shown in Table 2.

**Table 2**

| **Configuration parameter (value)** | **Target data source** |
|---|---|
| A | Text file |
| B | XML file |
| C | Relational database |

The configuration parameters in Table 2 are loading conditions of the target data sources. For example, the target data source includes a text file, an XML file, and a relational database. A loading condition of the text file is that a value of a configuration parameter is A, a loading condition of the XML file is that a value of a configuration parameter is B, and a loading condition of the relational database is that a value of a configuration parameter is C.

Further, when traversing a graphical element in the data source model, the IDE not only finds the graphical element that is a multi-input node, but also finds a graphical element that is a multi-output node. After traversing to the multi-output node, the IDE looks up, in the matching relationship that is between the target data sources and the different configuration parameters and that is configured on the multi-output node, a corresponding target data source according to the configuration parameter of the product, and uses a found target data source as a target data source for data loading. For example, if a value of the configuration parameter of the product deployed at a current site is A, it may be found, according to the matching relationship shown in the foregoing Table 2, that the target data source that may be used for data loading is a text file.

Specifically, after finding the target data source that may be used for data loading, the IDE may modify a graphical element number of the found target data source to a graphical element number of the multi-output node, delete other target data sources, except the foregoing found target data source (that is, the text file), connected with the multi-output node, and delete the multi-output node. That a found target data source for data extraction is a text file is used as an example. As shown in FIG. 9, FIG. 9 is a schematic diagram of a data flow model obtained after replacing, that is, a schematic diagram of a data flow model in which the graphical element number of the found input data source is modified to the graphical element number of the multi-input node, and the graphical element number of the found target data source is modified to the graphical element number of the multi-output node.

Further, the data source (including an input data source and a target data source) described in this embodiment of the present invention may include: a text file, an XML file, a relational database, a Hive, a Hadoop distributed file system (Hadoop Distributed File System, HDFS), a Hadoop database (Hadoop database, Hbase), an Mpp database, and the like. The foregoing data sources are merely exemplary rather than exhaustive, that is, data sources include but are not limited to the foregoing data sources.

In this embodiment of the present invention, rule information for data extraction is configured by introducing a multi-input node into a data flow configuration of an IDE in an ETL basic architecture, and rule information for data loading is further configured by introducing a multi-output node into the data flow configuration of the IDE, and a difference between heterogeneous data sources for data integration is shielded by using rule information of the multi-input node and rule information of the multi-output node, so as to integrate configurations that are of data having same computational logic and that are at different sites into one process for configuring. In this embodiment of the present invention, a precompilation apparatus is further introduced into the IDE. When performing precompilation, the foregoing precompilation apparatus may generate, according to an input data source selected on the multi-input node in the data flow model and a target data source selected on the multi-output node in the data flow model, a data flow model corresponding to a configuration parameter of a product, so that the data flow model can be used to perform process release or test.

In this embodiment of the present invention, multiple target data sources having same computational logic may be concentrated in one data flow for process configuration, and then a configuration development and test may be performed on a same configuration interface. Therefore, whether one or more of the foregoing target data sources are added, an IDE may configure, on a multi-output node, a matching relationship between each target data source and a configuration parameter during the process configuration, and select a corresponding target data source for a current multi-output node by using a precompilation apparatus according to the foregoing matching relationship and with reference to a configuration parameter of a product. When performing data loading, the IDE may use the foregoing selected target data source as a target data source for data loading. One or more sets of data flow and control flow do not need to be newly developed, that is, more projects do not need to be newly added, which reduces costs of baseline development and reduces project maintenance costs of baseline development.

Referring to FIG. 10, FIG. 10 is a schematic structural diagram of an embodiment of a heterogeneous data source shielding apparatus according to an embodiment of the present invention. The heterogeneous data source shielding apparatus described in this embodiment of the present invention includes:
a receiving module 1001, configured to receive a product process release request or a product process test request initiated by a user;
a precompilation module 1002, configured to obtain a configuration parameter of the product and a data flow model preconfigured for the product, where the data flow model includes a multi-input node that connects multiple input data sources, and a matching relationship between the input data sources and different configuration parameters is configured on the multi-input node; look up, in the matching relationship, a corresponding input data source according to the configuration parameter of the product; and replace the multi-input node in the data flow model with a found input data source; and
an output module 1003, configured to output a data flow model obtained after replacing by the precompilation module for the product process release or the product process test.

In specific implementation, the receiving module 1001 described in this embodiment of the present invention is connected to the precompilation module 1002, and the precompilation module 1002 is connected to the output module 1003. The receiving module 1001 may be an interface for interaction with a user, where the interface for interaction may be provided on a display interface, and the user may initiate the product process release request or the product process test request by using the display interface. When the receiving module 1001 receives the product process release request or the product process test request, the precompilation module 1002 performs precompilation on the data flow model preconfigured for the product, so as to replace the multi-input node in the data flow model with an input data source applicable to a current product, replace a multi-output node in the data flow model with a target data source applicable to the current product, and therefore obtain a data flow model applicable to the current product. The output module 1003 may output the data flow model obtained after replacing by the precompilation module 1002for the product process release or the product process test.

In specific implementation, the apparatus described in this embodiment of the present invention may preconfigure the data flow model for the product. Specifically, the data flow model that includes the multi-input node may be pre-established and stored, as shown in FIG. 5. The foregoing data flow model is formed by a series of graphical elements having execution logic, and each graphical element has a corresponding number. During external use, a graphical element may be visited by using a graphical element number. The multi-input node in the data flow model shown in FIG. 5 connects multiple input data sources, such as text extraction and Oracle extraction.

In some feasible implementation manners, before looking up, in the matching relationship, the corresponding input data source according to the configuration parameter of the product, the foregoing precompilation module 1002 is further configured to traverse the graphical element in the data flow model to find a graphical element that is a multi-input node in the data flow model.

In some feasible implementation manners, that the foregoing precompilation module 1002 replaces the multi-input node in the data flow model with a found input data source specifically includes:
modifying, by the precompilation module 1002, a graphical element number of the found input data source to a graphical element number of the multi-input node, deleting other input data sources, except the found input data source, connected with the multi-input node, and deleting the multi-input node.

In specific implementation, the apparatus shown in FIG. 10 may be specifically a precompilation apparatus 402 in an IDE. For a specific implementation process in which the foregoing precompilation module 1002 replaces the multi-input node in the data flow model with the input data source applicable to the current product and implements, by means of precompilation, shielding the heterogeneous data source, reference may be made to a specific implementation manner described in a heterogeneous data source shielding method provided in the foregoing embodiments of the present invention, and details are not described herein again.

In some feasible implementation manners, the data flow model described in this embodiment of the present invention further includes a multi-output node connected to multiple target data sources, where a matching relationship between the target data sources and different configuration parameters is configured on the multi-output node; and
the foregoing precompilation module 1002 is further configured to: when traversing the graphical element in the data flow model, find a graphical element that is a multi-output node in the data flow model.

In some feasible implementation manners, the foregoing precompilation module 1002 is further configured to look up, in the matching relationship between the target data sources and the different configuration parameters, a corresponding target data source according to the configuration parameter of the product, and replace the multi-output node in the data flow model with a found target data source.

In some feasible implementation manners, that the foregoing precompilation module 1002 replaces the multi-output node in the data flow model with a found target data source specifically includes:
modifying, by the precompilation module 1002, a graphical element number of the found target data source to a graphical element number of the multi-output node, deleting other target data sources, except the found target data source, connected to the multi-output node, and deleting the multi-output node.

In specific implementation, for a specific implementation process in which the foregoing precompilation module 1002 replaces the multi-output node in the data flow model with the target data source applicable to the current product and implements, by means of precompilation, shielding the heterogeneous data source, reference may be made to the specific implementation manner described in the heterogeneous data source shielding method provided in the foregoing embodiments of the present invention, and details are not described herein again.

In some feasible implementation manners, that the foregoing precompilation module 1002 obtains a configuration parameter of the product specifically includes:
obtaining, by the precompilation module, the configuration parameter of the product from a system configuration item of the product, or obtaining the configuration parameter of the product from a process configuration item of the product.

In some feasible implementation manners, after the receiving module 1001 receives the product process release request or the product process test request, the precompilation module 1002 obtains a configuration parameter of a product deployed at a current site. It should be noted that if the receiving module 1001 receives the product process release request, the precompilation module 1002 may obtain a configuration parameter of the product from the system configuration item of the product. If the receiving module 1001 receives the product process test, the precompilation module 1002 may obtain a configuration parameter from the process configuration item of the product. For example, a configuration parameter that is input by a user by using an interface is received, which may avoid frequently modifying the system configuration item during a test. In specific implementation, for a specific implementation process in which the foregoing precompilation module 1002 obtains the configuration parameter of the product, reference may be made to a specific implementation manner described in the heterogeneous data source shielding method provided in the forgoing embodiments of the present invention, and details are not described herein again.

The heterogeneous data source shielding apparatus described in this embodiment of the present invention may concentrate multiple input data sources and multiple target data sources having same computational logic in one data flow for process configuration, and then may perform configuration development and test on a same configuration interface. Therefore, whether one or more of the foregoing input data sources or target data sources are added, during the process configuration, the apparatus may configure, on a multi-input node, a matching relationship between each input data source and the configuration parameter, and configure, on a multi-output node, a matching relationship between each target data source and a configuration parameter, and select a corresponding input data source and target data source for a current product by using a precompilation module according to the foregoing matching relationship and with reference to a configuration parameter of a product. When data extraction is being performed, the foregoing selected input data source may be used as a data source for the data extraction, and when data loading is being performed, the foregoing selected target data source may be used as a target data source for the data loading. One or more sets of data flow and control flow do not need to be newly developed, that is, more projects do not need to be newly added, which reduces costs of baseline development and reduces project maintenance costs of baseline development.

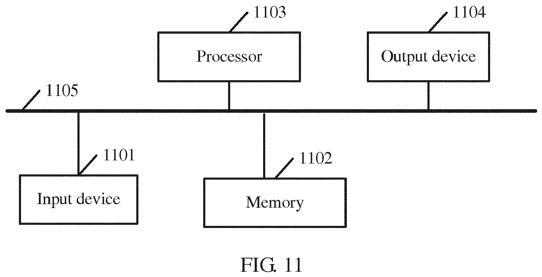

Referring to FIG. 11, FIG. 11 is a heterogeneous data source shielding apparatus according to another embodiment of the present invention. The apparatus described in this embodiment includes an input device 1101, a memory 1102, a processor 1103, an output device 1104, and a bus 1105.

The input device 1101, the memory 1102, the processor 1103, and the output device 1104 are connected by using the bus 1105.

The input device 1101 is configured to provide a display interface for a user, and receives a product process release request or a product process test request initiated by the user by using the display interface.

The memory 1102 is configured to store program code and store a data flow model preconfigured for a product, where the data flow model includes a multi-input node that connects multiple input data sources, and a matching relationship between the input data sources and different configuration parameters is configured on the multi-input node.

The processor 1103 is configured to execute the program code in the memory 1102 for performing the following processing: obtaining a configuration parameter of the product and the data flow model that is preconfigured for the product and that is stored in the memory; looking up, in the matching relationship, a corresponding input data source according to the configuration parameter of the product; and replacing the multi-input node in the data flow model with a found input data source.

The output device 1104 is configured to output a data flow model obtained after replacing by the processor for the product process release or the product process test.

The output device 1104 is specifically configured to output the data flow model obtained after replacing to a scheduling and execution module in ETL.

In some feasible implementation manners, before looking up, in the matching relationship, the corresponding input data source according to the configuration parameter of the product, the foregoing processor 1103 is further configured to traverse a graphical element in the data flow model to find a graphical element that is a multi-input node in the data flow model.

In some feasible implementation manners, that the foregoing processor 1103 replaces the multi-input node in the data flow model with a found input data source specifically includes:
modifying a graphical element number of the found input data source to a graphical element number of the multi-input node, deleting other input data sources, except the found input data source, connected with the multi-input node, and deleting the multi-input node.

In some feasible implementation manners, the data flow model stored in the foregoing memory 1102 further includes a multi-output node connected to multiple target data sources, and a matching relationship between the target data sources and different configuration parameters is configured on the multi-output node; and
the processor 1103 is further configured to: when traversing the graphical element in the data flow model, find a graphical element that is a multi-output node in the data flow model.

In some feasible implementation manners, the foregoing processor 1103 is further configured to look up, in the matching relationship between the target data sources and the different configuration parameters, a corresponding target data source according to the configuration parameter of the product, and replace the multi-output node in the data flow model with a found target data source.

In some feasible implementation manners, that the foregoing processor 1103 replaces the multi-output node in the data flow model with a found target data source specifically includes:
modifying a graphical element number of the found target data source to a graphical element number of the multi-output node, deleting other target data sources, except the found target data source, connected with the multi-output node, and deleting the multi-output node.

In some feasible implementation manners, that the foregoing processor 1103 obtains a configuration parameter of the product specifically includes:
obtaining the configuration parameter of the product from a system configuration item of the product, or obtaining the configuration parameter of the product from a process configuration item of the product.

In specific implementation, the foregoing input device 1101 may specifically be a user operation interface of the heterogeneous data source shielding apparatus provided in this embodiment of the present invention, and the user may initiate the product process release request or the product process test request by using the foregoing interface.

In specific implementation, for a specific implementation manner of the processor 1103 provided in this embodiment of the present invention, reference may be made to an implementation manner described in a heterogeneous data source shielding method embodiment provided in this embodiment of the present invention, and details are not described herein again.

The apparatus provided in this embodiment of the present invention is applied to an ETL system, so that the ETL system implements shielding a heterogeneous data source. Therefore, a heterogeneous data source shielding ETL system provided in this embodiment of the present invention may include an apparatus shown in FIG. 10, a scheduling and execution module, and a monitoring module. The scheduling and execution module and the monitoring module may be implemented according to the prior art, and details are not described herein again.

The foregoing heterogeneous data source shielding method disclosed in the embodiments of the present invention may be applied to the foregoing heterogeneous data source shielding apparatus, which may be specifically implemented by using hardware modules such as an input device, a receiver, a processor, a memory, and an output device. In an implementation process, steps in the foregoing method may be implemented by using an integrated logic circuit of hardware in the input device, the receiver, the processor, the memory, and the output device or an instruction in a form of software. The processor may be a general purpose processor, a digital signal processor, an application-specific integrated circuit, a field programmable gate array, or another programmable logical device, discrete gate or transistor logical device, or discrete hardware component, and the processor may implement or execute the methods, steps, and logical block diagrams disclosed in the embodiments of the present invention. The general purpose processor may be a microprocessor, any conventional processor, or the like. Steps of the methods disclosed with reference to the embodiments of the present invention may be directly executed and completed by means of a hardware processor, or may be executed and completed by using a combination of hardware and software modules in the processor. The software module may be located in a mature storage medium in the field, such as a random access memory, a flash memory, a read-only memory, a programmable read-only memory, an electrically-erasable programmable memory, or a register.

It should be understood that "one embodiment" or "an embodiment" mentioned in the entire specification refers to a specific feature, structure, or character relevant to an embodiment is included in at least one embodiment in the present invention. Therefore, "in one embodiment" or "in an embodiment" appeared everywhere in the entire specification may not always refer to a same embodiment. In addition, these specific features, structures, or characters may be combined in one or more embodiments in any appropriate manner. Sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

It should be understood that in the embodiments of the present invention, "B corresponding to A" indicates that B is associated with A, and B may be determined according to A. However, it should be further understood that determining B according to A does not mean that B is determined only according to A, and B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing base station, device, and module, reference may be made to a corresponding process in the foregoing method embodiments, and details are not described herein again.

In the several embodiments provided in the present application, it should be understood that the disclosed apparatus and method may be implemented in other manners. For example, the described apparatus embodiment is merely exemplary. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In addition, functional units (or functional modules) in the embodiments of the present invention may be integrated into one processing unit, or each of the units may exist alone physically, or two or more units are integrated into one unit. The integrated unit may be implemented in a form of hardware, or may be implemented in a form of a software functional unit.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server, or another remote source by using a coaxial cable, an optical fiber/cable, a twisted pair, a digital STA line (DSL) or wireless technologies such as infrared, radio and microwave, the coaxial cable, optical fiber/cable, twisted pair, DSL or wireless technologies such as infrared, radio and microwave are included in fixation of a medium to which they belong. For example, a disk (Disk) and disc (disc) used by the present invention includes a compact disc (CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In summary, what is described above is merely exemplary embodiments of the technical solutions of the present invention, but is not intended to limit the protection scope of the present invention. Any modification, equivalent replacement, or improvement made without departing from the spirit and principle of the present invention shall fall within the protection scope of the present invention.

## Claims

1. A heterogeneous data source shielding method, comprising:
receiving, by an integrated development environment IDE, a product process release request or a product process test request initiated by a user;
obtaining, by the IDE, a configuration parameter of the product and a data flow model preconfigured for the product, wherein the data flow model comprises a multi-input node that connects multiple input data sources, and a matching relationship between the input data sources and different configuration parameters is configured on the multi-input node;
looking up, by the IDE and in the matching relationship, a corresponding input data source according to the configuration parameter of the product; and
replacing, by the IDE, the multi-input node in the data flow model with a found input data source, and using a data flow model obtained after replacing for the product process release or the product process test.

2. The method according to claim 1, wherein before the looking up, by the IDE and in the matching relationship, a corresponding input data source according to the configuration parameter of the product, the method further comprises:
traversing, by the IDE, a graphical element in the data flow model to find a graphical element that is a multi-input node in the data flow model.

3. The method according to claim 1 or 2, wherein the replacing, by the IDE, the multi-input node in the data flow model with a found input data source specifically comprises:
modifying a graphical element number of the found input data source to a graphical element number of the multi-input node; and
deleting other input data sources, except the found input data source, connected with the multi-input node, and deleting the multi-input node.

4. The method according to any one of claims 1 to 3, wherein the data flow model further comprises a multi-output node connected to multiple target data sources, and a matching relationship between the target data sources and different configuration parameters is configured on the multi-output node; and
when traversing the graphical element in the data flow model, the IDE further finds a graphical element that is a multi-output node in the data flow model.

5. The method according to claim 4, wherein the method further comprises:
looking up, by the IDE and in the matching relationship between the target data sources and the different configuration parameters, a corresponding target data source according to the configuration parameter of the product; and
replacing, by the IDE, the multi-output node in the data flow model with a found target data source.

6. The method according to claim 5, wherein the replacing, by the IDE, the multi-output node in the data flow model with a found target data source specifically comprises:
modifying a graphical element number of the found target data source to a graphical element number of the multi-output node; and
deleting other target data sources, except the found target data source, connected with the multi-output node, and deleting the multi-output node.

7. The method according to any one of claims 1 to 6, wherein the obtaining, by the IDE, a configuration parameter of the product specifically comprises:
obtaining the configuration parameter of the product from a system configuration item of the product, or obtaining the configuration parameter of the product from a process configuration item of the product.

8. The method according to any one of claims 1 to 7, wherein the input data source comprises at least one of a text file, an Extensible Markup Language XML file, a relational database, a Hive, a Hadoop distributed file system HDFS, a Hadoop database Hbase, or an Mpp database.

9. The method according to any one of claims 1 to 8, wherein the target data source comprises at least one of a text file, an XML file, a relational database, a Hive, an HDFS, an Hbase, or an Mpp database.

10. A heterogeneous data source shielding apparatus, comprising:
a receiving module, configured to receive a product process release request or a product process test request initiated by a user;
a precompilation module, configured to obtain a configuration parameter of the product and a data flow model preconfigured for the product, wherein the data flow model comprises a multi-input node that connects multiple input data sources, and a matching relationship between the input data sources and different configuration parameters is configured on the multi-input node; look up, in the matching relationship, a corresponding input data source according to the configuration parameter of the product; and replace the multi-input node in the data flow model with a found input data source; and
an output module, configured to output a data flow model obtained after replacing by the precompilation module for the product process release or the product process test.

11. The apparatus according to the claim 10, wherein before looking up, in the matching relationship, the corresponding input data source according to the configuration parameter of the product, the precompilation module is further configured to traverse a graphical element in the data flow model to find a graphical element that is a multi-input node in the data flow model.

12. The apparatus according to claim 10 or 11, wherein that the precompilation module replaces the multi-input node in the data flow model with a found input data source specifically comprises:
modifying, by the precompilation module, a graphical element number of the found input data source to a graphical element number of the multi-input node, deleting other input data sources, except the found input data source, connected with the multi-input node, and deleting the multi-input node.

13. The apparatus according to any one of claims 1 to 12, wherein the data flow model further comprises a multi-output node connected to multiple target data sources, and a matching relationship between the target data sources and different configuration parameters is configured on the multi-output node; and
the precompilation module is further configured to: when traversing the graphical element in the data flow model, find a graphical element that is a multi-output node in the data flow model.

14. The apparatus according to claim 13, wherein the precompilation module is further configured to look up, in the matching relationship between the target data sources and the different configuration parameters, a corresponding target data source according to the configuration parameter of the product, and replace the multi-output node in the data flow model with a found target data source.

15. The apparatus according to claim 14, wherein that the precompilation module replaces the multi-output node in the data flow model with a found target data source specifically comprises:
modifying, by the precompilation module, a graphical element number of the found target data source to a graphical element number of the multi-output node, deleting other target data sources, except the found target data source, connected with the multi-output node, and deleting the multi-output node.

16. The apparatus according to any one of claims 10 to 15, wherein that the precompilation module obtains a configuration parameter of the product specifically comprises:
obtaining, by the precompilation module, the configuration parameter of the product from a system configuration item of the product, or obtaining the configuration parameter of the product from a process configuration item of the product.

17. The apparatus according to any one of claims 10 to 16, wherein the input data source comprises at least one of a text file, an Extensible Markup Language XML file, a relational database, a Hive, a Hadoop distributed file system HDFS, a Hadoop database Hbase, or an Mpp database.

18. The apparatus according to any one of claims 10 to 17, wherein the target data source comprises at least one of a text file, an XML file, a relational database, a Hive, an HDFS, an Hbase, or an Mpp database.

19. A heterogeneous data source shielding system, comprising the apparatus according to claims 10 to 18, a scheduling and execution module, and a monitoring module, wherein
the scheduling and execution module is configured to execute, according to a data flow model output by the apparatus according to claims 10 to 18, logic corresponding to the data flow model; and
the monitoring module is configured to monitor an execution result of the scheduling and execution module.
